# EUROPEAN PATENT APPLICATION

(11) **EP 2 937 461 A1**
(43) Date of publication of application: **28.10.2015**
(21) Application number: 13851753.7
(22) Date of filing: 01.11.2013
(51) Int. Cl.: D06F 93/00, G06Q 50/04, G05B 19/418

(54) **DATA VISUALIZATION AND ACCUMULATION DEVICE FOR CONTROLLING STEPS IN CONTINUOUS PROCESSING SYSTEM**

(30) Priority: 05.11.2012 JP 2012243566
(71) Applicant: Minamitani, Akihisa, Himeji-shi, Hyogo 670-0983 (JP)
(72) Inventor: MINAMITANI, Tomio, Himeji-shi Hyogo 670-0983 (JP); MINAMITANI, Takahiro, Himeji-shi Hyogo 670-0983 (JP)
(74) Representative: Sielewiesiuk, Jakub
(86) International application number: PCT/JP2013/079687
(87) International publication number: WO 2014/069619

(57) **Abstract**

The invention is related to a visualization device capable of visualizing the process flow on entire multiple item continuous processing system on a time series basis and investigating the cause of a system loss.

A visualization device for managing an operating state in a first processing step to which a step loss retroacts or swears back in a multiple item continuous processing process in which a batch processing is performed item by item, wherein each of icons indicating various kinds of items, shows the progress of the operation in the processing step sequentially item by item on a time series basis in a matrix of cells wherein a vertical length of the matrix is divided by cells of operating hours and rows of the respective operating hours are partitioned by each one batch processing time of the first processing step. The data is accumulated in the matrix and the data is utilized while being visualized.

## Description

### Field of Invention

The invention relates to a data visualization and accumulation device for controlling steps in a multiple item continuous processing system which is applicable to a continuous laundry processing system comprising washing, drying and finishing steps in a laundry (linen-supply) factory.

### Background of Invention

In a continuous washing and finishing system of a conventional laundry factory, firstly soiled laundries to be washed are sorted into each items, such as, sheets, pillow-cases, bathrobes, towels and so on and then each items to be loaded into each bags are transferred to a continuous washing machine, and finished as clean linens through the necessary steps depending on the different items.

In a controlled continuous washing machine system, however, there are many problems of stop processing or slowed processing caused by some reasons such as mechanical failure and bad condition of operators , resulting in swearing back to slow down of the first step and then reaching to a loss of the whole process. Therefore, according to the patent literature 1, a control process has been proposed so as not to stop the whole process and to keep a normal process progress even if the above failure would happen in the machines in the continuous washing process. On the other hand, according to the prior patent literature 2, there has been proposed a PC device for getting the picture of the total number of batches for each items, the finishing number, the total energy consumption and the total manpower cost by inputting automatically signals of items to be charged into the washing machines and the output signals of items to be discharged from the washing machines and finally calculating the total number of clean linen and the total number of defective linen in each items.

### Prior literature

Patent literature 1; (Japanese unexamined publication Tokukaihei 7-178300)
Patent literature 2; ((Japanese unexamined publication Tokukai 2006-26035),

### Disclosure of Invention

In the patent literature 1, the invention is provided with a wash sling bag store lane which stores item bags before washing, where a call order of the next sling bag is controlled and changed depending on the number of bags before washing without taking the reason of changing the order into consideration, so that optimization of the whole system can not be realized yet. In the patent literature 2, the invention is provided with a PC controller where the charged number of items, the finished number of items and the defective number are recorded and calculated on an item to item basis. However, any other conditions causing the loss of system has not been found although the total number to be processed can be accumulated, whereby the optimization has not been completed. Therefore, the present invention is related to a device for optimization of the whole continuous process control on the basis of new important knowledge where a report on how items are processing is visualized on a time-series basis. In order to search the problem causing the loss of the whole process on an item to item basis. The object of the present invention is to provide a device for data visualization which makes possible to optimize a processing flow by means of visualization and accumulation of necessary data in a whole processing flow of multiple items, especially, at least the first step flow thereof to solve the problem causing the loss of the system on a time-series basis.

### Means to solve the problem

The present invention is based on the above-mentioned new knowledge that the most urgent and crucial thing for controlling the operation condition in the multiple item continuous processing process should be focused on the first step thereof because the processing loss of the whole process tends to swear back to the first step. Accordingly, the present invention is related to a data visualization and accumulation device for controlling steps in a continuous processing system at least comprising a step of storing each of multiple items to be processed per one batch unit, a step of feeding the items of one batch unit in turn from the store lane into a first step, a step of sorting and charging the items to be processed per one batch unit from the first step into a second step, which comprises a time matrix of multiple cells arranged in a plane for visualization and accumulation of the process data in the first step wherein either one of a horizontal or vertical length of the matrix is divided by a time span corresponding to or based on one batch time of the first step while the other length of the matrix is divided by one unit of the operation time, whereby depending on the signal per one batch unit based on a kind of and an amount of items to be processed at the storing step, each of the cells in the matrix is indicated on a time series basis in order to charging items into the first processing step by icons corresponding to the item to be processed, resulting in accumulation of progress of one batch order to be processed in the first step through a whole operation time and visualization of the progress on a time series basis in the first step.

### Function and effect of the invention

According to the present invention, although the processing loss in the multiple item continuous processing steps swears back to the first step, signals of icons shown on the matrix indicate what kinds of the items and how the items are processed and have been processed in the first step, so that it is possible to assess by eye that a progress of the whole process is going now by a progress of the first step. That is, in case of a horizontal length of the cell in the matrix showing one batch processing time, an icon existing in one of the cells in the matrix means and shows the item shown by the icon is being processed and has been processed at the operating time indicated by the icon existing in the matrix and no icon existing in one of the cell in the matrix means the item shown by the icon is not being processed and has not been processed at the operating time indicated by no icon existing in the matrix. Therefore, presence of icons and absence of icons in the cells of the matrix can indicate when the item to be indicated by the icon is being processed or has been processed and when no item is being processed or has been processed in what step in the whole process. So, it is possible to confirm whether each of all the steps of the whole process is in the state of operation or not in the state of operation by presence or absence of the icon in each cell of the matrix on a time-series basis. In the most focusing first process, if there is absent icon in the cell or cells of the first step, there are obvious at a glance some available capacity in the first step, resulting in easy to decrease the loss of the process. Therefore, according to the present invention, as the final objective it is possible to get no icon empty condition of the cells and then full icon entry in the first step by utilization of the available capacity shown by the icon in the matrix and de-fragmentation or optimization of step. According to the present invention, the past operations are visualized and accumulated in the matrix, it is easy to use the data and to optimize the process control by a method of simulation, resulting in realization of the operational optimization.

In the present invention provided with the second step. Co-operation condition between the first step and the second step is easy to be determined by visualization of both steps, and preferably, the second step may be provided with a time-matrix device for visualization, wherein a horizontal length of the cell in the time-matrix is divided by a time span corresponding to or based on one batch time of the second step while the other length of the cell is divided by one unit of the operation time. In this case, the inventive device may be carried out by a step of selecting one of the devices in the second step depending on the item processed in the first step, and a step of visualizing the second step on a time-series basis by the icon with respect to each charging of the item into the second step.

In the present invention provided with a third step, the items to be processed in the second step which sent to the third step should be sorted and charged into a device of the third step for selection. The items to be processed in the third step can be controlled with the time-matrix for visualization wherein a horizontal length of the cell in the time-matrix is divided by a time span corresponding to or based on one batch time while the other length of the cell is divided by one unit of the operation time. In this case, the continuous processing condition from the first step to the third step can be visualized on a time-series basis by the icon. The data input of the third finishing step would be preferably made after the end of the third step by the items with the finished number on a time-series basis.

In order to facilitate interactions between the first step, the second step and the third step, the time-matrix is preferably provided with cells wherein a horizontal length of the cell may be divided by a time span corresponding to or based on one batch time of the first step, because the whole process can be related on a time series basis to the first step. In such case, the progress of whole process can be visualized and the operation of whole process can be optimized with ease. In the time matrix , while a vertical length of the cell is generally divided by a time unit of the operation time span, a horizontal length may be divided by the time unit span. In such a case, a vertical length of the cell is divided by a time span corresponding to or based on one batch time. In either one of this cases, the same function and effect can be obtained. The present invention of the multiple item continuous process system can be applied to a continuous washing, drying and finishing system, wherein the first step is provided with one or plural of washing machines and the second step is provided with plural drying machines for drying each items and the third step is provided with one or plural finishing machines for finishing each items in order to visualize and accumulate the data in the whole process..

### Brief Description of Drawings

Fig.1 presents a schematic perspective view of a continuous washing, drying and finishing factory according to the invention,
Fig.2A presents a schematic layout of 1^{st} floor of the factory according to the embodiment of the present invention,
Fig.2B presents a schematic layout of 2^{nd} floor of the factory according to the embodiment of the present invention,
Fig.3A shows a plane view of a time-matrix indicating a progress of a first continuous washing machines in the first step of the continuous processing system,
Fig.3B shows a plane view of a time-matrix indicating a progress of a second continuous washing machines in the first step of the continuous processing system,
Fig. 4A-1 presents a plane view of a time-matrix in the visualization device indicating a progress of a first drying machines for full drying item in the second step of the continuous processing laundry system,

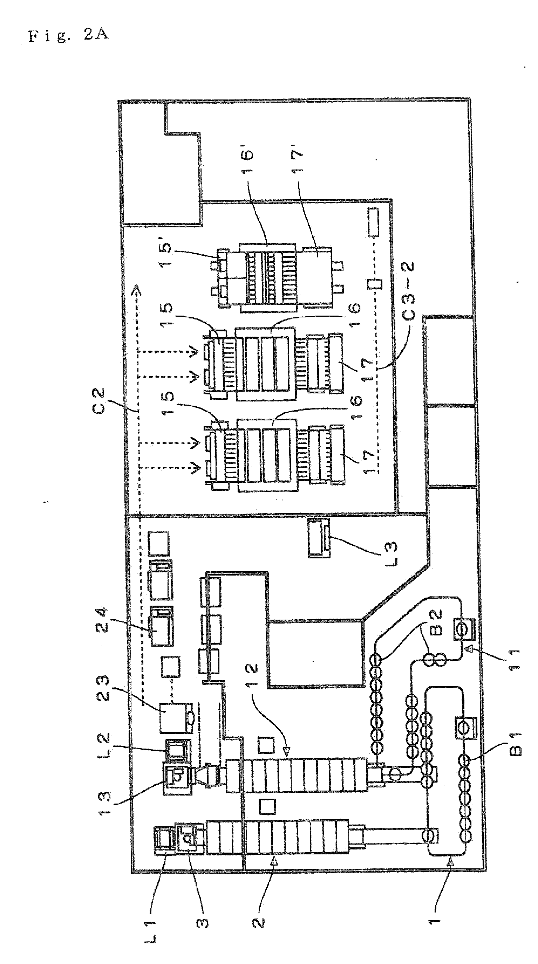

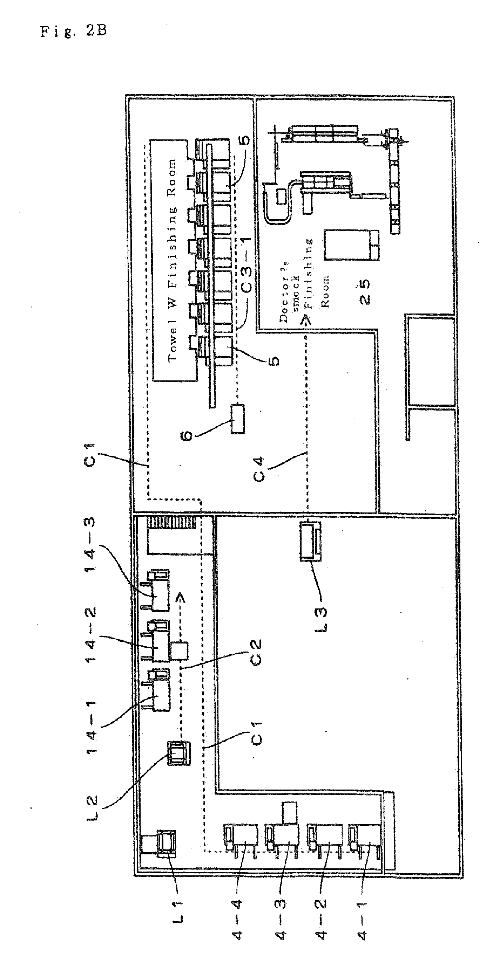

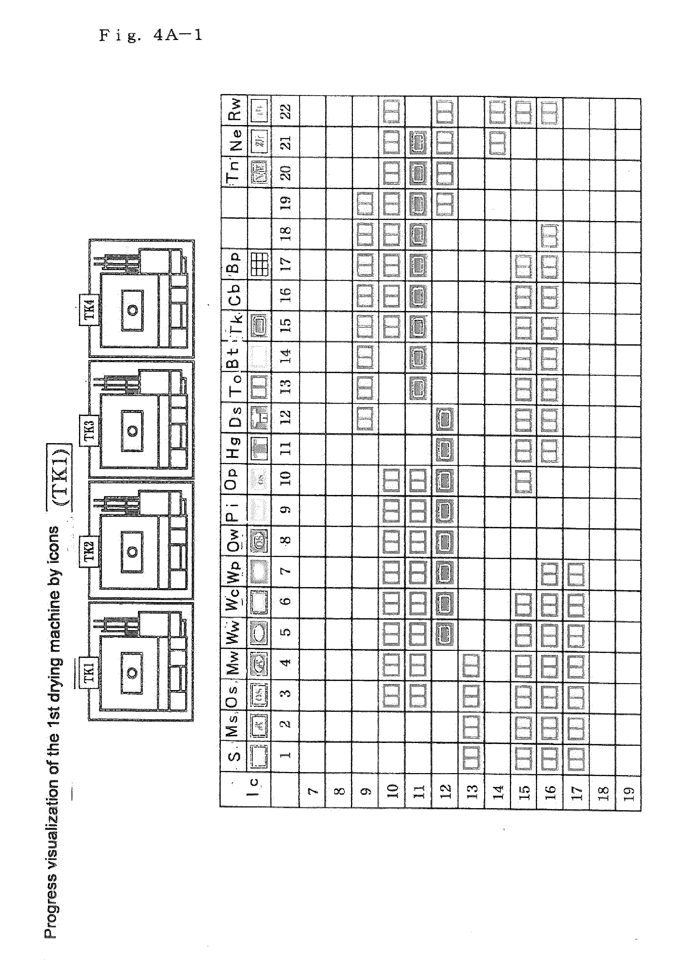

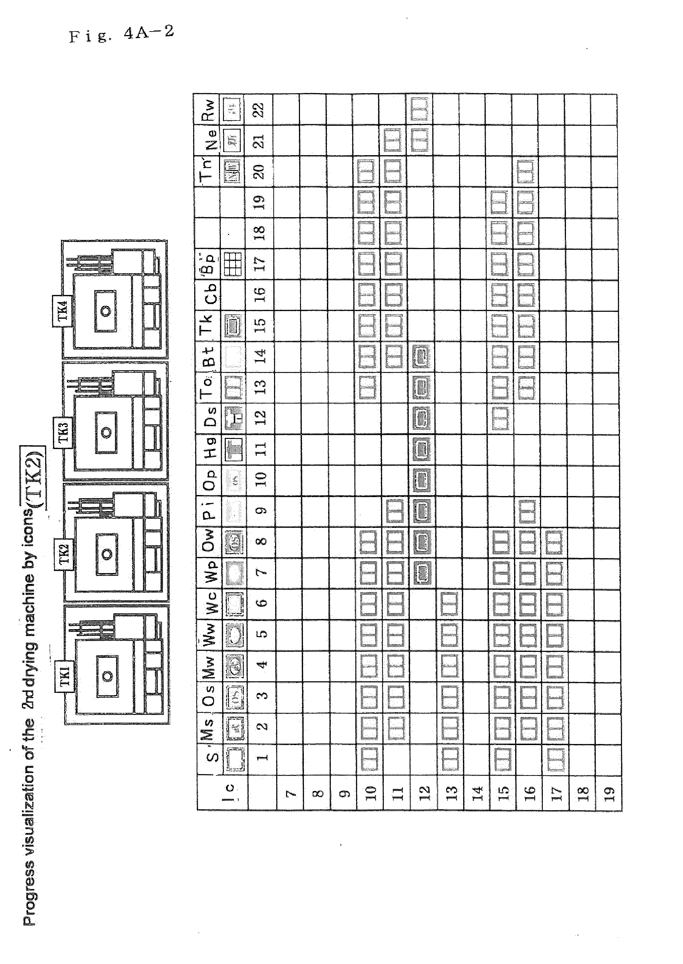

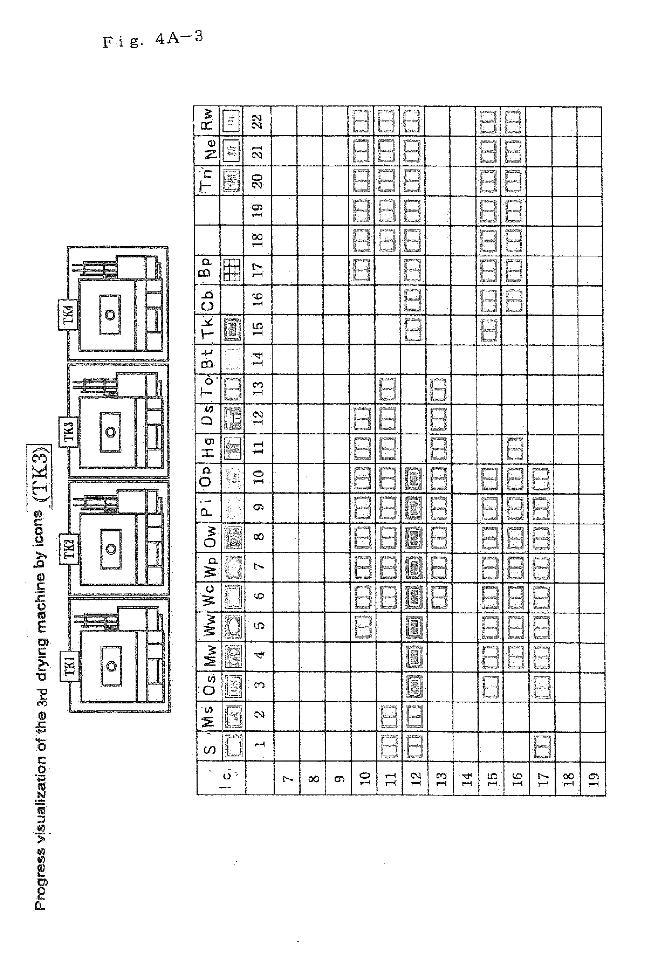

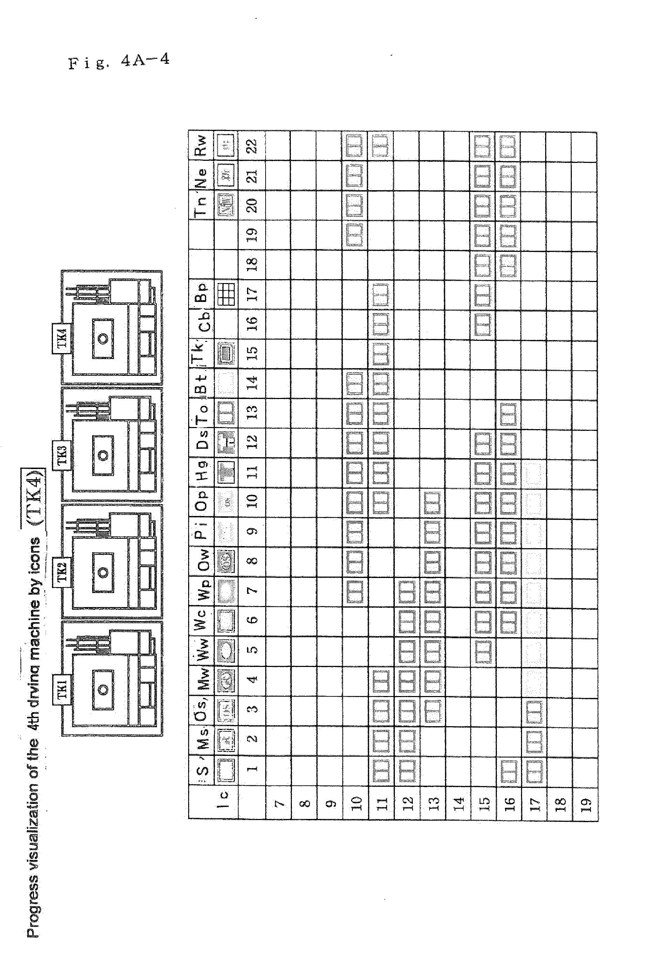

Fig. 4A-2 presents a plane view of a time-matrix in the visualization device indicating a progress of a second drying machines for full drying item in the second step of the continuous processing laundry system,
Fig. 4A-3 presents a plane view of a time-matrix in the visualization device indicating a progress of a third drying machines for full drying item in the second step of the continuous processing laundry system,
Fig. 4A-4 shows a plane view of a time-matrix in the visualization device indicating a progress of a fourth drying machines for full drying item in the second step of the continuous processing laundry system,

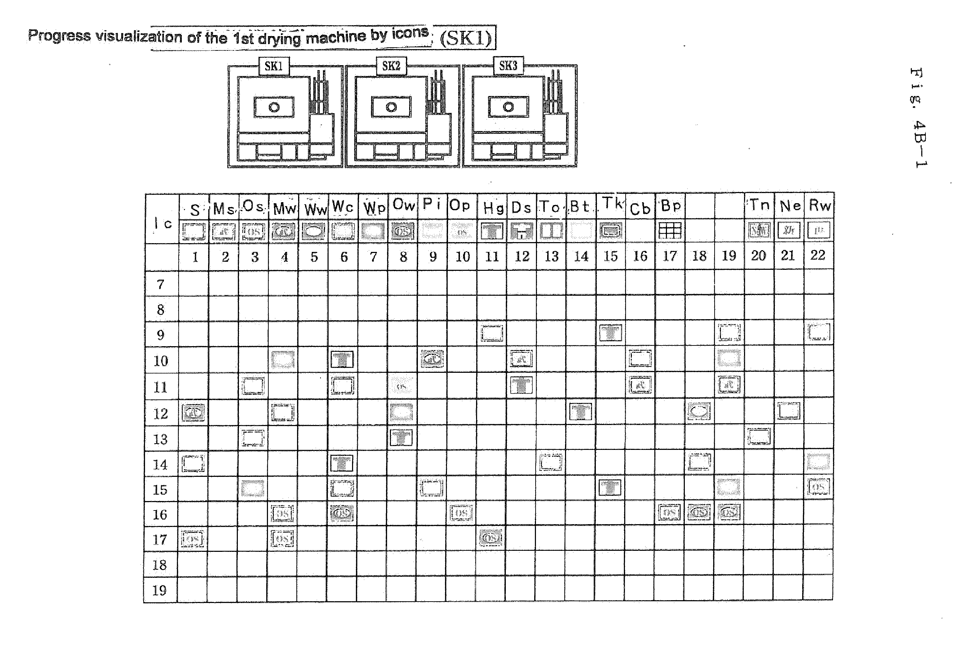

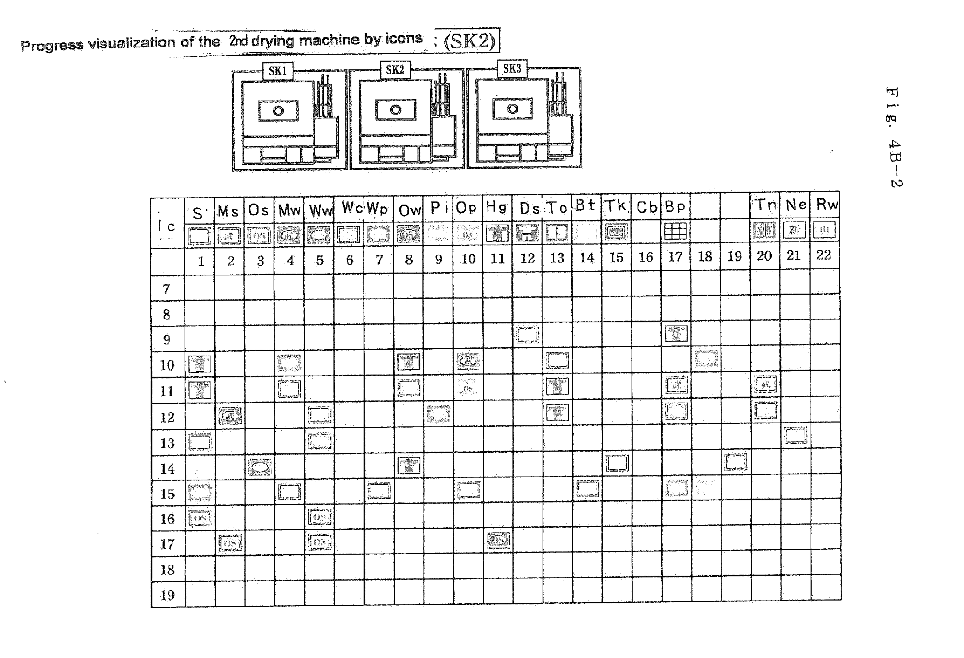

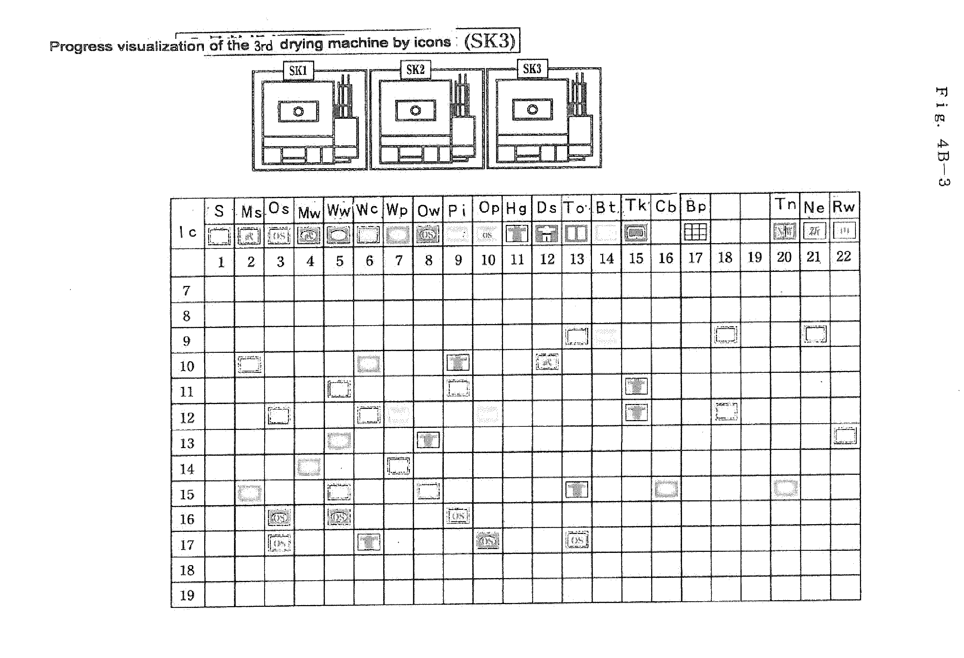

Fig. 4B-1 shows a plane view of a time-matrix in the visualization device indicating a progress of a third drying machines for half drying item such as hospital gown or sheets in the second step of the continuous processing laundry system,
Fig. 4B-2 presents a plane view of a time-matrix in the visualization device indicating a progress of a second drying machines for half drying item such as hospital gown or sheets in the second step of the continuous processing laundry system,
Fig. 4B-3 presents a plane view of a time-matrix in the visualization device indicating a progress of a third drying machines for half drying item such as hospital gown or sheets in the second step of the continuous processing laundry system,
   wherein
   Icon - Ic; sheets - S; Musashi sheets - Ms; OS sheets - Os; OS color sheets - Oc; Musashi wrapping clothes - Mw; Wrapping clothes white - Ww; Wrapping clothes color- Wc; Wrapping clothes pattern - Wp; Pillow - Pi; Hospital gown - Hg; Doctor's smoke - Ds, Cotton brankt - Cb; New - Ne; Rewash - Rw; OS pillow - Op; Hospital gown - Hg; Towel - To, Bath towel - Bt; Towelkt - Tk; Bed pad - Bp; OS Wrapping clothes - Ow; Towel color new - Tn.

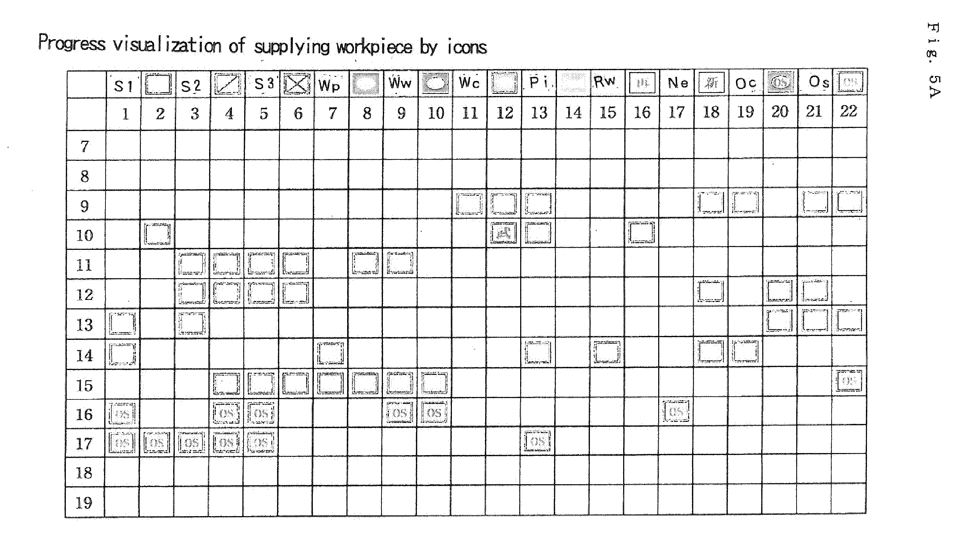

Fig.5-A shows a plane view of a time-matrix in the visualization device indicating a progress of laundry folding machines for full drying item such as towels in the third step of the continuous processing laundry system,

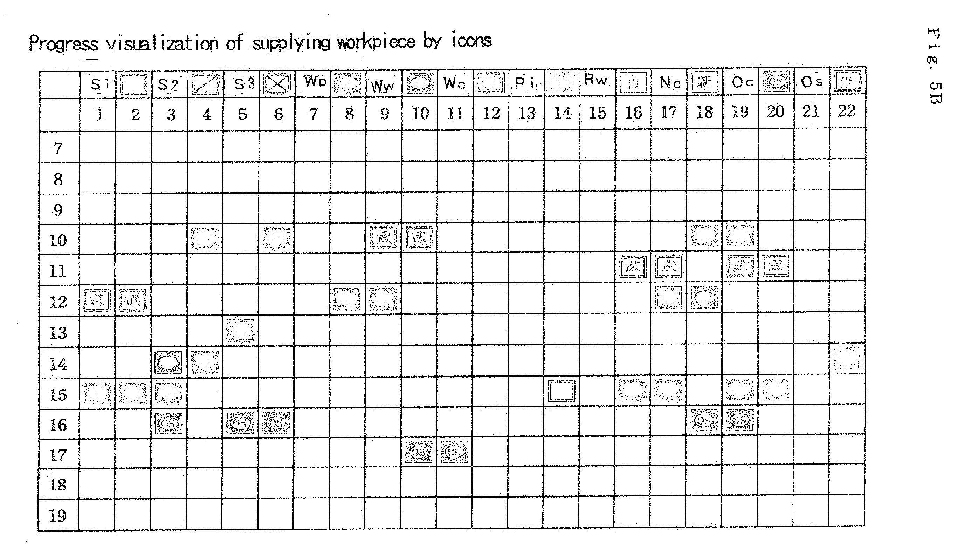

Fig.5-B shows a plane view of a time-matrix in the visualization device indicating a progress of a first finishing roll machines for half drying item such as sheets in the third step of the continuous processing laundry system,

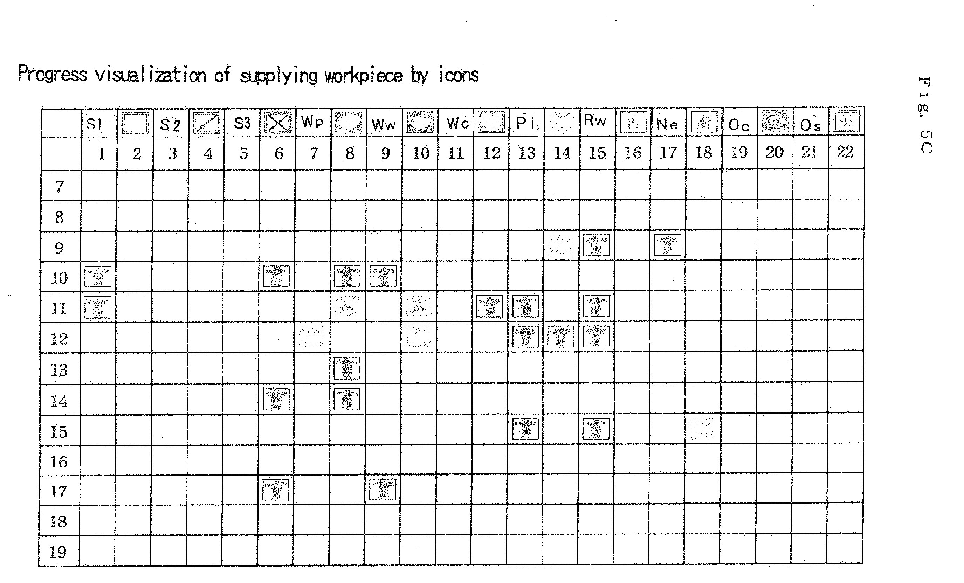

Fig.5-C shows a plane view of a time-matrix in the visualization device indicating a progress of a third finishing roll machines for half drying item such as wrapping cloth in the third step of the continuous processing laundry system,

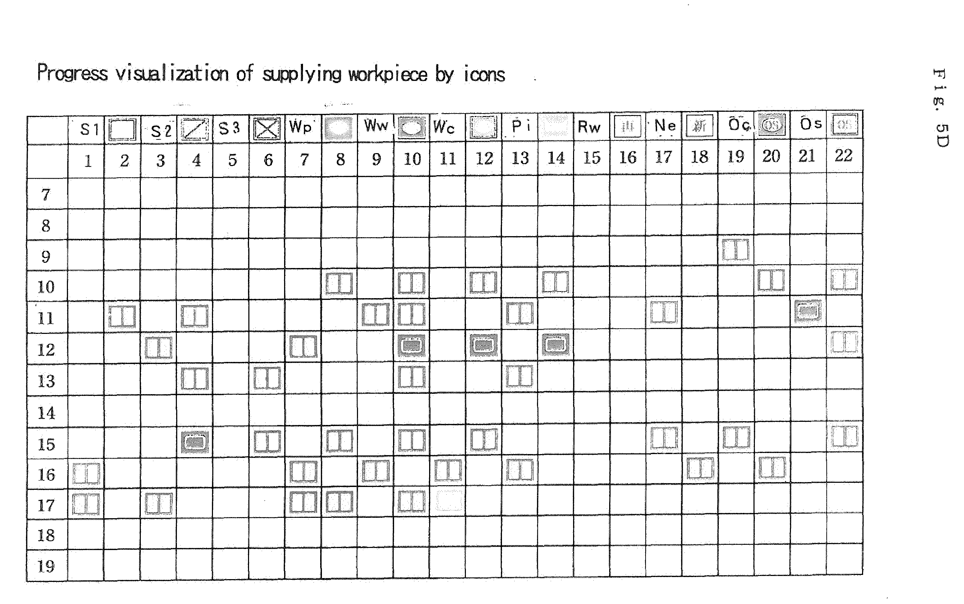

Fig.5-D shows a plane view of a time-matrix in the visualization device indicating a progress of a second finishing roll machines for half drying item such as hospital gown in the third step of the continuous processing laundry system,

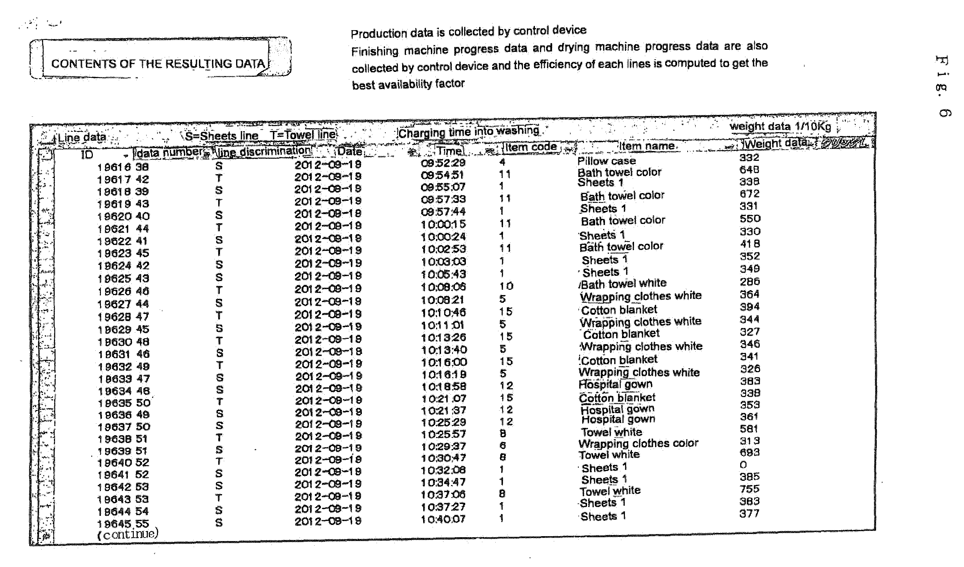

Fig.6 present an obtained data showing the progress condition of the items to be charged into a first step in the embodiment according to the invention.

### Best Mode for Carrying Out the Invention

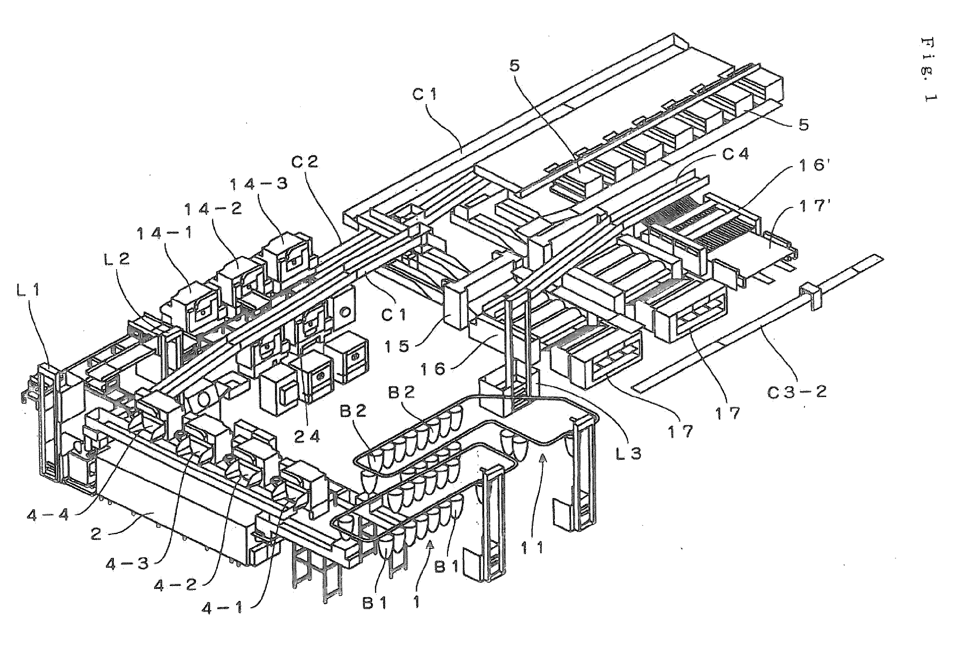

The present invention will be described with reference to the embodiment shown in drawings. Fig.1 presents a schematic perspective view showing a whole system of a continuous washing, drying and finishing factory according to the invention. It is applied to a continuous washing lane of laundry from hospital which comprises a full drying lane composed of a flow from a first floor to a second floor and a half drying lane composed of a flow in a first floor, wherein items to be processed are sorted and processed by item to item. The full drying lane is applied to a kind of towels, pillow covers and bath mats and comprises a step of a continuous washing, a step of drying, a step of fold finishing, wherein the full dry items are processed in the following order; a step of Packing →a step of Charging conveyor →a step of a first washing machine 2→a step of Hydraulic dehydrator 3→ a step of Conveyor (Lifting & Traveling) L1→a step of Dryer (2 Lots) 4→a step of Conveyor (Distributing) C1→ a step of Towel folder 5→a step of Finished product conveyor C3-1→a step of Binding machine→ a step of Shipment waiting. On the other hand, the half drying lane is applied to a kind of sheets, doctor's smock, hospital gowns and wrapping clothes and comprises a step of a continuous washing, a step of pressure or centrifuge drying, a step of ironing in a state of half drying, wherein the shake items such as sheets are processed in the following order; a step of Packing →a step of Charging conveyor →a step of a second washing machine 12→a step of Hydraulic dehydrator 13→ a step of Conveyor (Lifting & Traveling) L1→a step of Dryer (1 Lot) 14→a step of Conveyor (Distributing) C2→a step of Spreader 15→a step of Roll 16→a step of Folder 17→a step of Finished product conveyor C3-2→a step of Binding machine→ a step of Shipment waiting. Further, the doctor's smocks are processed in the following order; a step of Packing →a step of Charging conveyor → a step of the second washing machine 12→a step of Hydraulic dehydrator 23→ a step of Conveyor→ a step of Dryer (1 Lot) 24→ a step of Wagon → a step of Lift conveyor L3→a step of Finishing room 25→a step of Shipment waiting.

### (Step of storing)

Each of items to be processed before washing is sorted and charged into the bags B and is stored in either of a first stock lane 1 or a second stock lane 2 by item to item depending on the full drying item or the half drying item.

In the store step, there are provided with a first charging bar store lane 1, wherein the full dry items including towels and pillow covers in the bag are transferred in sequence and also a second charging bar store lane 11, wherein the half dry items including bathrobes, sheets and bath-mats in the bag is transferred in sequence, and each item charged in the bag are weighted and each weight signal of the items with the item name are recorded. This is the store step.

### (Step of the continuous washing)

The charged bag BI with the full dry items are called out in sequence from the charging bag store lane 1 and transferred to a first continuous washing machine 2 by a charging conveyor C/V while the charged bag B2 with the half dry items are called out in sequence from the charging bag store lane 2 and transferred to a second continuous washing machine 12. The first continuous washing machine is provided with 10 washing tubs, wherein each washing tubs are controlled according to a continuous washing order program of pre-washing, washing and rinsing for the full dry item in a manner to transfer the item from one to another washing tub in sequence and wash them in each washing tubs. The second continuous washing machine is also provided with 10 washing tubs, wherein each washing tubs are controlled according to a continuous washing order program of pre-washing, washing and rinsing for the half dry item in a manner to transfer the item from one to another washing tub in sequence and wash them in each washing tubs. This is the step of washing.

### (Step of hydrating and drying)

The processed items such as towels T and shakes S from the first and the second continuous washing machines are sorted into the full dry items and the half dry items. The full dry items such as towels T are charged from the first continuous washing machines to a hydraulic dehydrator 3 and transferred to a first dryer 4-1 to a fourth dryer 4-4 (2 lots) on a second floor by a conveyor (Lifting & Traveling) L1 . The full dry operation time needs 20 to 30 minutes and may be changed depending on the thickness and the whole amounts. On the other hand, depending on necessity of ironing finish, the half dry items are sorted into doctor's smokes and shake items such as sheets, hospital gowns and wrapping clothes. The shake items are charged from the second continuous washing machines 12 to a hydraulic dehydrator 13 and transferred to a dryer 14-1 to a dryer 14-3 (1 lot) by a conveyor (Lifting & Traveling) L2 while the doctor's smocks are charged from the second continuous washing machines 12 to a centrifuge dehydrator 23 and transferred to a dryer 24 by a conveyor. The half dry items such as wrapping clothes and hospital gowns and the other shake item such as sheets need the same after-treatment, but the previous items need more 7 or 8 minutes of drying time because the clothes contain more water while the latter items need less 4 or 5 minutes of drying time of because the latter drying process mainly needs to freeze the clothes. Therefore, the latter drying process may be carried out by a tumbler and dryer.

### (Step of finishing)

The final step of the continuous washing lane is a finishing step. The full dry items such as towels are fed from a dryer 4 (2 lots) to a towel folder 5 by a distributing conveyor C1 and then subjected to a detecting process in order to get the number of finished products. After recording, the finished products are fed to a binding machine 6 and are in storage waiting for a shipment . On the other hand, although it is usually necessary to be subjected to a irony finishing process in a state of half dry, a different step of finishing is applied depending on a kind of the item. Therefore, an item sorting is necessary. The shake items from the second continuous washing machine are transferred to a second floor by Lift L2 and are subjected to a step of drying in the dryer (1 lot) 14. Then, the dried items are fed to a spreader 15 and are irony finished by a first finishing roll 16 and folded by a folder 17. After checking, the finished products are counted by item to item to be in storage waiting for a shipment. The hospital gowns are usually placed in a hanger and after irony finishing, folding and checking, the finished products are counted and the number is recorded. The finished products are transferred to a binding machine and are in storage waiting for a shipment. The doctor's smocks are transferred from a dryer (1 lot) to wagon and lifted to a second floor by a conveyor lane L3, and fed into a doctor's smock finishing room 25 by a conveyor C4, where after checking, the finished products are counted by each unit of items to be in storage waiting for a shipment.

In the continuous washing lane, a continuous step of washing to dehydrating is processed just like in a manner of process passing through a single tube. Therefore, smoothing the item out from dehydrating machines makes it possible to keep the same processing time. However, sometimes the problems happen at the time when the item from the dehydrate machine is charged into a dryer through a conveyor and when the item from a dryer is fed to a finishing roll or a towel finishing site. Speaking concretely, the full dry item lane is designed in a manner that a number of dryers are provided not so as to delay the process and the ability of conveyor is setup not so as to delay the process. For example, if the drying time needs 24 minutes and one batch unit time is 3 minutes with 2 lots of dryer, at least 4 pair of dryer (2 lots) are necessary. In case that the drying time and the transferring time are different depending on the item to be processed, waiting on the conveyor for charge sometimes happens and the resulting process loss in the washing machines happens. On the other hand, in case that the drying time of almost all items is shorter while the washing time is longer, the washing process does not catch up with the drying process, that results in the process time loss caused by empty of dryer. On the contrary to this, in case that the drying time of almost all items is longer while the washing time is shorter, the drying process does not catch up with the washing process, that results in long waiting time on the conveyor and washing time loss caused by empty of washing machine.

Therefore, considering what kind of item should be processed and how the items can be transferred by the conveyor, it is important to accumulate and analyze data of progress in order to think about what order of items would be most effective. Consequently, optimization could be realized by less number of machines, less amount of utilities (water, steam and electricity) and less operation time for workers (less waiting time).

The half-dried and shake items are supposed to be processed by the same continuous washing machines because the both after-treatment are the same, but the operation time in the dryer (the drying time) is not the same. So that if no analyzation on the process data would be made day by day, it will be difficult to determine the daily procedure day by day because the daily throughput is not fixed. For example, the daily throughput can be counted in case that the daily throughput is determined by the delivery schedule of the customer. In almost all cases, as the items to be processed in a day are in transportation to the laundry factory, it is difficult to count out the daily throughput by each kind and amount of items to be delivered. If the priority is given to what item can be processed at the present, almost all of the continuous washing machines would sometimes be occupied and even if the additional items to be processed would be charged in turn into the washing machines, the resulting time lag of 40 to 60 minutes would be caused until to be discharged from the dryer. The effective operation means to make a progress of process according to a determined process time (one batch time) so as not to cause a waiting time on the conveyor as well as not to make an empty of the dryer, that results in keeping the number of item supply enough to be handled by workers and the number of finished products enough to be delivered to the customer. Therefore, it is essential to accumulate and analyze the past process data in order to determine how to arrange the schedule depending on the number of items to be processed and the number of the items to be delivered from the customer to the factory.

In the present linen business field, the process cost will not be changed as production increases or decreases and there has been no way to search the cause of loss without accumulation and analyzation of the process data. According to the present invention, use of the time-matrix makes it possible to accumulate and visualize the data of operation condition in each steps to make it possible to analyze the data.

Fig.6 is an obtained data showing the progress condition of the items to be charged into a first step in the embodiment according to the invention, wherein the data include the number of data, lane discrimination, date, operation time, item code, item name, weight data. T shows a process lane of towel which should be programmed to be processed as the full dry items such as towels, pillow cover and bath mats in the following order; Packing →Charging conveyor →a first washing machine 2→Hydraulic dehydrator 3→ Conveyor (Lifting & Traveling) L1→Dryer (2 Lots) 4→Conveyor (Distributing) C1→Towel folder 5→Finished product conveyor C3-1→Binding machine→ Shipment waiting. On the other hand, S shows a process lane of sheets which in a state of half dry for a kind of sheets, doctor's smock, hospital gowns and wrapping clothes, wherein the shake items such as sheets are programmed to be processed in the following order; Packing →charging conveyor →a second washing machine 12→Hydraulic dehydrator 13→ Conveyor (Lifting & Traveling) L1→Dryer (1 Lot) 14→Conveyor (Distributing) C2→Spreader 15→Roll 16→Folder 17→Finished product conveyor C3-2→Binding machine→ Shipment waiting, while the doctor's smocks are programmed to be processed in the following order; Packing →Charging conveyor →the second washing machine 12→Hydraulic dehydrator 23→ Conveyor→ Dryer (1 Lot) 24→Wagon→Lift conveyor L3→Finishing room 25→Shipment waiting. However, it is difficult to analyze how items are processed in each of steps even if all data in all steps can be obtained. Therefore, every processing devices are provided with the following visualization devices in order to visualize the operation condition.

### Visualization of continuous washing process

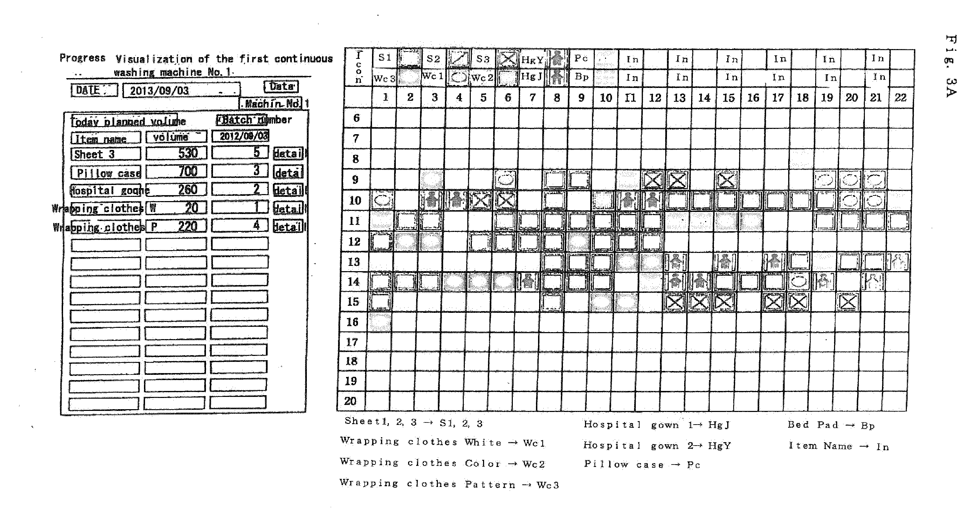

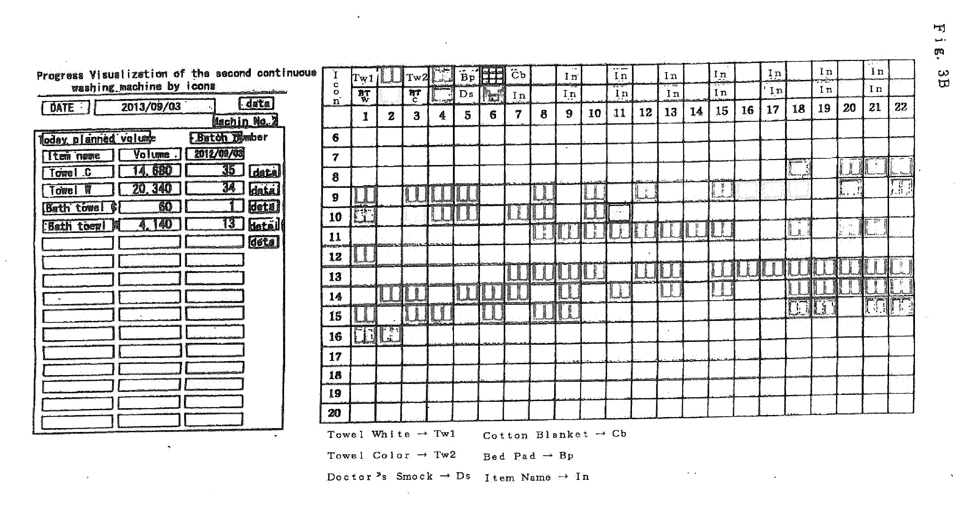

Fig.3A shows a plane view of a time-matrix indicating a progress of a first continuous washing machines in the first step of the continuous processing system, while Fig.3B shows a plane view of a time-matrix indicating a progress of a second continuous washing machines in the first step of the continuous processing system.

In the first continuous washing machine, 18 lots of first wrapping clothes in print were charged at 8 am, and 3 lots of second wrapping clothes in print were charged at 9 am, after 2 lots 2 lots of white wrapping clothes and sheets of 1 lot were immediately charged. Absence of icons in the cell shows absence of item to be charged. On the other hand, in the second continuous washing machines, 18 lots of bath towels and immediately 20 to 4 lots of white towels were charged, after 1 lot, 3 lots of while towels were charged and then after 2 lots 2 lots of white towels were charged. Their continuous charging processes are shown in the matrix, wherein no icon in the cell shows no item to be charged.

According to the present invention, the visualization devices show the operation condition of the first and second continuous washing machines obviously just by looking.

### Visualization of dehydrating and drying process

Fig. 4A-1 to 4A-4 present plane views of a time-matrix in the visualization device indicating a progress of a first to a fourth drying machines for full drying item in the second step of the continuous processing laundry system, while Fig. 4B-1 to B-3 show plane views of a time-matrix in the visualization device indicating a progress of a second drying machines for half drying item such as hospital gown or sheets in the second step of the continuous processing laundry system.

In the full drying step of towels, one batch of towel drying step need 8 lots of drying times. On the other hand, in the half drying step of shake items, one lot of short drying step is necessary. The empty of cell shows no dry step at the present and in the past. Comparing the whole process at each operation times with the operation condition in the first washing step, if the items after drying is not transferred fast, there appear some waiting items on the conveyor before drying, resulting in cause of time lag in the continuous washing process and appearance of empty in the cell of the matrix. If the items to be processed are the same as the full dry items, they are subjected to a different drying operation so that the drying operation can not catch up with the washing operation, resulting in existence of empty in the drying machines and wasted time on the operation. The operation condition can be visualized by icons indicating each items on the matrix. On the contrary, if almost all of the items need a long drying time, there are items waiting on the conveyor from the continuous washing step to the drying step, resulting in the operation time loss causing washing waiting to the continuous washing step. According to the present invention, comparison the first step with the second step by visualization makes it easy to check the cause of the time lag and solve the problem.

### Visualization in the finishing third step

Fig.5-A shows a plane view of a time-matrix in the visualization device indicating a progress of laundry folding machines for full drying item such as towels in the third step of the continuous processing laundry system,

Fig.5-B shows a plane view of a time-matrix in the visualization device indicating a progress of a first finishing roll machines for half drying item such as sheets in the third step of the continuous processing laundry system,

Fig. 5-C shows a plane view of a time-matrix in the visualization device indicating a progress of a third finishing roll machines for half drying item such as wrapping cloth in the third step of the continuous processing laundry system,

Fig.5-D shows a plane view of a time-matrix in the visualization device indicating a progress of a second finishing roll machines for half drying item such as hospital gown in the third step of the continuous processing laundry system,

In the finishing step, the items are usually done manually. The half dry and shake washing items are processed in the same continuous washing machine because both are processed by the same after-treatment. The drying time are different each other. If consideration on the washing order is not enough, time lag of 40 to 60 minute will be made and a sufficient mount of the items can not be fed to workers. In such cases, the inventive visualization device can make it clear whether or not the whole process is effectively cooperated.

As summarized, to keep working effective or busy means to abide the first step processing time and then not to clog the conveyor with the items, not to make an empty in the dryers and to keep the item feed enough to workers. Therefore, visualization according to the invention makes it clear whether or not there is some empties in the matrix of the third step and depending on the empty condition of the matrix it is possible to control and keep the feed amount enough to workers in the finishing step. Accompanied with visualization in the first and second step, it is possible to analyze the reason of exhibiting greater loss capability and to accumulate the data for amendment.

According to the inventive visualization device, visualization the number of the washing machines can be optimized and the amount of water, steam and electricity can be decreased and also the operation time can be shortened.

1, 11 - charging bag store lane before washing
2, 12- continuous washing machine
3, 13 - Dehydrater
L1, L3 - Lift conveyor
4, 14 - Dryer
C1 ~C4 - Conveyor
6 - Binding machine
15 - Spreader
16 - Finishing roll
17 - Folder

## Claims

1. A data visualization and accumulation device for controlling steps in a continuous processing system comprising at least a step of storing item by item each of multiple items to be processed per one batch unit, a step of feeding the items of one batch unit in turn from the store lane into a first step, a step of sorting and charging the items to be processed per one batch unit from the first step into a second step, which comprises a time matrix of multiple cells arranged in a plane for visualization and accumulation of the process data in the first step, wherein either one of a horizontal or vertical length of the matrix is divided by a time span corresponding to or based on one batch time of the first step while the other length of the matrix is divided by one unit of the operation time,
whereby depending on the signal per one batch unit based on a kind of and an amount of items to be processed at the storing step, each of the cells in the matrix is indicated item by item on a time series basis according to the order of charging items into the first processing step by icons corresponding to the item to be processed, resulting in accumulation of progress of one batch order to be processed in the first step through a whole operation time and visualization of the progress item by item on a time series basis in the first step.

2. A data visualization and accumulation device for controlling steps in a continuous processing system according to claim 1, wherein the second step is provided with a plural of the second processing machines and depending on the input signal item by item made in the store step, each of the items to be processed per one batch unit is sorted and charged into the second step and one of multiple processing machines is selected depending on the item to be processed in the second step, which comprises a time-matrix device for visualization wherein a horizontal length of the time-matrix is divided by a time span corresponding to or based on one batch time of the second step while the other length of the matrix is divided by one unit of the operation time, whereby each of the cells in the matrix is indicated item by item on a time series basis according to the order of charging items into the second step by icons corresponding to the item to be processed, resulting in accumulation of progress of one batch order to be processed in the second step through a whole operation time and visualization of the progress item by item on a time series basis in the second step.

3. A data visualization and accumulation device for controlling steps in a continuous processing system according to claim 1 or 2, which further comprises a third step provided with a plural of the third processing machines and depending on the input signal in the stock step, one of the third multiple processing machines is selected to process the items to be charged from the second step, which comprises a time-matrix device for visualization wherein a horizontal length of the time-matrix is divided by a time span corresponding to or based on one batch time while the other length of the matrix is divided by one unit of the operation time.
whereby each of the cells in the matrix is indicated item by item on a time series basis in the order of charging items into the third step by icons corresponding to the item to be processed, resulting in accumulation of progress of one batch order to be processed in the third step through a whole operation time and visualization of the progress item by item on a time series basis in the third step.

4. A data visualization and accumulation device for controlling steps in a continuous processing system according to claim 2 or 3, wherein the second and the third step are provided with a time-matrix wherein a horizontal length of the matrix is divided by a time span corresponding to or based on one batch time in the first step, whereby comparison of the first step progress with the second or the third step progress is made possible under the data visualization.

5. A data visualization and accumulation device for controlling steps in a continuous processing system according to either one of claims 1 to 4, wherein the first step, the second and the third step are corresponding to each of the washing step, the drying step and finishing step in a continuous washing system and wherein the first washing step is provided with one or plural of the continuous washing machines, the second step is provided with plural drying machines for drying each items item by item separately and the third step is provided with one or plural of the finishing devices for finishing each items item by item separately.
